(19) Europäisches Patentamt / European Patent Office / Office européen des brevets

(11) **EP 3 348 956 B1**

(12) **EUROPEAN PATENT SPECIFICATION**

(45) Date of publication and mention of the grant of the patent:
**28.10.2020   Bulletin 2020/44**

(21) Application number: **15903537.7**

(22) Date of filing: **07.09.2015**

(51) Int Cl.:
*G01B 7/30* (2006.01)     *F01D 25/00* (2006.01)
*G01P 3/481* (2006.01)    *F02C 6/12* (2006.01)
*G01D 5/245* (2006.01)

(86) International application number:
**PCT/JP2015/075375**

(87) International publication number:
**WO 2017/042871 (16.03.2017 Gazette 2017/11)**

(54) **ROTATION SPEED ESTIMATION DEVICE, MULTI-CYLINDER INTERNAL COMBUSTION ENGINE, AND DEVICE FOR CONTROLLING MULTI-CYLINDER INTERNAL COMBUSTION ENGINE**

ROTATIONSGESCHWINDIGKEITSSCHÄTZVORRICHTUNG, MEHRZYLINDRIGER VERBRENNUNGSMOTOR UND VORRICHTUNG ZUR STEUERUNG EINES MEHRZYLINDRIGEN VERBRENNUNGSMOTORS

DISPOSITIF D'ESTIMATION DE VITESSE DE ROTATION, MOTEUR À COMBUSTION INTERNE À CYLINDRES MULTIPLES ET DISPOSITIF DE COMMANDE DE MOTEUR À COMBUSTION INTERNE À CYLINDRES MULTIPLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**18.07.2018   Bulletin 2018/29**

(73) Proprietors:
• **Applied Electronics Corporation**
  **Tama-ku**
  **Kawasaki-City**
  **Kanagawa 214-0023 (JP)**
• **Tomonari, Kengo**
  **Kawasaki-shi, Kanagawa 214-0023 (JP)**

(72) Inventors:
• **YOSHIDA, Hiroyuki**
  **Kawasaki-shi**
  **Kanagawa 214-0023 (JP)**

• **SHOJI, Kazuichi**
  **Kawasaki-shi**
  **Kanagawa 214-0023 (JP)**
• **IWAMOTO, Hironori**
  **Kawasaki-shi**
  **Kanagawa 214-0023 (JP)**

(74) Representative: **AWA Sweden AB**
  **Junkersgatan 1**
  **582 35 Linköping (SE)**

(56) References cited:
**EP-A1- 1 564 559      EP-A2- 2 073 019
EP-A2- 2 390 471      WO-A1-2013/114564
WO-A1-2013/114564   DE-A1- 19 708 000
JP-A- H02 221 663     JP-A- S61 254 863
JP-A- 2014 231 830    US-A1- 2013 304 418**

**Description**

TECHNICAL FIELD

The present disclosure relates to a rotational speed estimating device, a multicylinder internal combustion engine, and a control device for a multicylinder internal combustion engine.

BACKGROUND ART

Japanese Patent Publication No. 2015-34780A discloses as a conventional rotational speed estimating device one which estimates a rotational speed of a rotating body having a plurality of blades, such as a compressor wheel of an exhaust turbocharger of an internal combustion engine, based on an output value of an eddy current sensor detecting passage of the blades.

Prior art documents also include WO2 2013/114564 A1, DE 19708000 A1, US 2013/304418 A1, EP 2390471 A2, EP 1564559 A1 and EP 2073019 A2.

SUMMARY OF DISCLOSURE

TECHNICAL PROBLEM

However, in the above-mentioned conventional rotational speed estimating device, shape error of the blades of the rotating body and sampling error were not considered, so the precision of estimation of the rotational speed was liable to deteriorate.

The present disclosure was made focusing on such a problem and has as its object to precisely estimate the rotational speed of a rotating body having a plurality of blades.

SOLUTION TO PROBLEM

To solve the above problem, according to the invention, a multicylinder internal combustion engine is provided according to the disclosure of the independent claim 1.

ADVANTAGEOUS EFFECTS OF DISCLOSURE

According to the multicylinder internal combustion engine comprising a rotational speed estimating device according to this aspect of the present disclosure, it is possible to precisely estimate the rotational speed of a rotating body having a plurality of blades.

BRIEF DESCRIPTION OF DRAWINGS

[FIG. 1] FIG. 1 is a cross-sectional view schematically showing a compressor of an exhaust turbocharger of an internal combustion engine.

[FIG. 2] FIG. 2 is a plan view schematically showing a compressor wheel used in the compressor shown in FIG. 1.

[FIG. 3] FIG. 3 is a view schematically showing a principle of detection by an eddy current sensor.

[FIG. 4A] FIG. 4A is a view showing a trend in an output value in a case of using an eddy current sensor as a passage detection sensor.

[FIG. 4B] FIG. 4B is a view showing a trend in an output value in a case of using an eddy current sensor as a passage detection sensor.

[FIG. 5] FIG. 5 is a view showing a trend in instantaneous rotational speed estimated while a compressor wheel turns once.

[FIG. 6] FIG. 6 is a plan view similar to FIG. 2 schematically showing a compressor wheel.

[FIG. 7] FIG. 7 is a view explaining a reason why deviation occurs between a time interval $\Delta t$ between blades calculated by an amp unit and an actual time interval $\Delta tr$ between blades.

[FIG. 8] FIG. 8 is a flow chart explaining control for estimation of a rotational speed of a compressor wheel according to a first embodiment.

[FIG. 9] FIG. 9 is a schematic overall view of an internal combustion engine.

[FIG. 10] FIG. 10 is a view showing trends in an angular velocity and kinetic energy of a rotating body of an exhaust turbocharger in one cycle of the internal combustion engine shown in FIG. 9.

[FIG. 11] FIG. 11 is a view showing trends in an angular velocity and kinetic energy of a rotating body of an exhaust turbocharger in one cycle of the internal combustion engine shown in FIG. 9.

[FIG. 12] FIG. 12 is a flow chart explaining control for estimation of a rotational speed of a compressor wheel according to a second embodiment.

[FIG. 13] FIG. 13 is a table for setting a threshold value $t_{thres}$ based on an engine rotational speed of the internal combustion engine shown in FIG. 9.

[FIG. 14] FIG. 14 is a flow chart explaining control for estimation of a rotational speed of a compressor wheel according to a third embodiment.

DESCRIPTION OF EMBODIMENTS

Below, referring to the drawings, embodiments of the present disclosure will be explained in detail. Note that, in the following explanation, similar components are assigned the same reference numerals.

First Embodiment

Configuration of Compressor

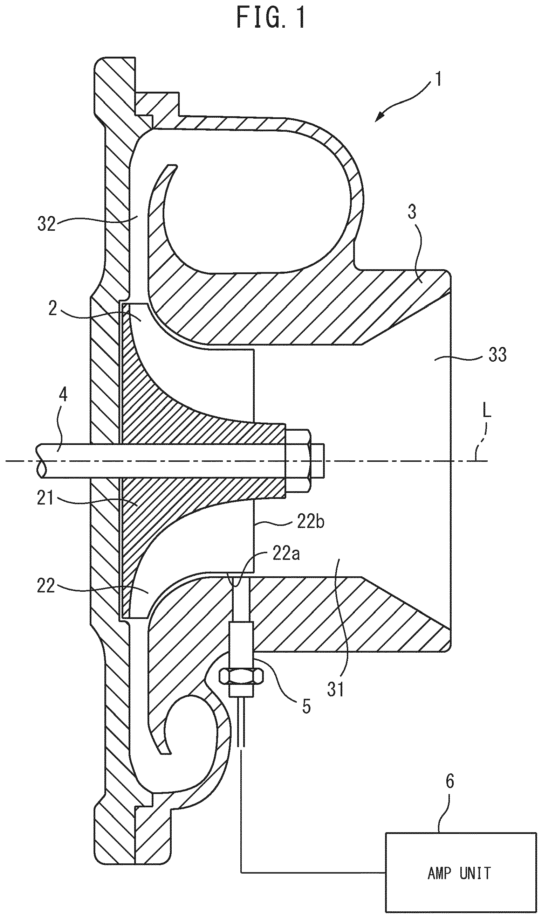

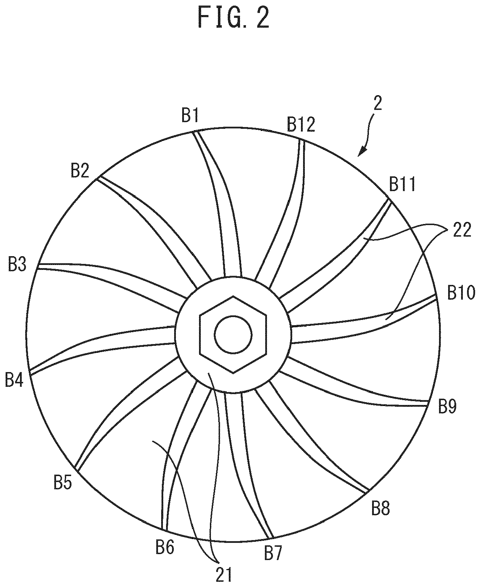

Referring to FIG. 1 and FIG. 2, a rotational speed estimating device according to a first embodiment will be explained. FIG. 1 is a cross-sectional view schematically showing a compressor 1 of an exhaust turbocharger of an internal combustion engine. FIG. 2 is a plan view schematically showing a compressor wheel (impeller) 2 used in the compressor 1 shown in FIG. 1.

As shown in FIG. 1, the compressor 1 is provided with a compressor wheel 2 compressing a gas and a housing 3 holding the compressor wheel 2.

The compressor wheel 2 is provided with a central body 21 connected to a turbine wheel (not shown) of an exhaust turbocharger via a shaft 4 and a plurality of blades 22 extending from a surface of the central body 21 in a diametrical direction and axial direction of the compressor wheel 2. The central body 21 is fastened to the shaft 4 so that its axial line L becomes coaxial with the axial line of the shaft 4.

Further, as will be understood from FIG. 2, the compressor wheel 2 of the present embodiment has 12 blades 22 of the same shape arranged at equal intervals. FIG. 2, to facilitate understanding of the explanation, assigns numerals to the blades 22 (B1 to B12). Note that, the number of blades 22 is not limited to 12 and may be greater than 12 or less than 12. Further, in the compressor wheel 2 of the present embodiment, the plurality of blades 22 are configured to extend in the diametrical direction and axial direction of the compressor wheel 2. However, the plurality of blades 22 may be curved shapes or any other shapes so long as they are able to compress a fluid flowing into the compressor 1. Further, the blades 22 do not necessarily have to be arranged at equal intervals. Further, part or all of the blades 22 may also be configured so as to have different shapes from the other blades.

The housing 3 has a central passage 31 extending through the center of the housing 3 and an annular passage 32 extending around the central passage 31. One end part of the central passage 31 is opened and configures an inlet 33 into which fluid flows. Further, the annular passage 32 is arranged around the other end part of the central passage 31. Inside of this annular passage 32, the compressor wheel 2 is arranged in the central passage 31. Therefore, fluid flowing in from the inlet 33 passes through the central passage 31 and flows out to the annular passage 32 through the compressor wheel 2.

The compressor wheel 2 can rotate about its axial line L inside the housing 3. Further, the compressor wheel 2 is configured so that if it rotates, the diametrical direction end parts of the blades 22 move in the circumferential direction along the inner circumferential surface of the housing 3 in a state with a slight clearance formed with the inner circumferential surface.

Passage Detection Sensor

Further, in the present embodiment, a passage detection sensor 5 for detecting a blade 22 passing a predetermined angular position inside the housing 3 (predetermined position) is provided in the housing 3. That is, the passage detection sensor 5 detects that a blade 22 has passed in front of a detecting part of the passage detection sensor 5. In the present embodiment, the passage detection sensor 5 is arranged so as to face the diametrical direction end faces 22a of the blades 22 of the compressor wheel 2 and so as to become substantially parallel to the normal directions of the diametrical direction end faces 22 of the blades 22. Further, the passage detection sensor 5 is arranged in the housing 3 so as to be positioned at the inlet side of the compressor wheel 2. In the example shown in FIG. 1, the passage detection sensor 5 is arranged in the housing 3 adjoining the inlet side end faces 22b of the blades 22 of the compressor wheel 2.

Further, the passage detection sensor 5 is connected to an amp unit 6 functioning also as a rotational speed estimating device for estimating a rotational speed of the compressor wheel 2. The output signal of the passage detection sensor 5 is input to the amp unit 6. The amp unit 6 is comprised of an amplifier for amplifying the output signal of the passage detection sensor 5, a CPU for estimating the rotational speed of the compressor wheel 2 based on the output signal amplified by the amplifier, etc. combined into a single unit. In the present embodiment, the passage detection sensor 5 and the amp unit 6 are made separate members, but the passage detection sensor 5 may also house the amp unit 6 and the passage detection sensor 5 and the amp unit 6 may also be combined into a single unit.

Here, the blades 22 of the compressor wheel 2 gradually increase in temperature the further from the inlet side to the outlet side. This is because the fluid flowing through the compressor wheel 2 is pressurized from the inlet side toward the outlet side. In the present embodiment, the passage detection sensor 5 is arranged in the housing 3 so as to be positioned at the inlet side of the compressor wheel 2, so is arranged at a relatively low temperature region. For this reason, it is possible to reduce the effect of heat on the passage detection sensor 5.

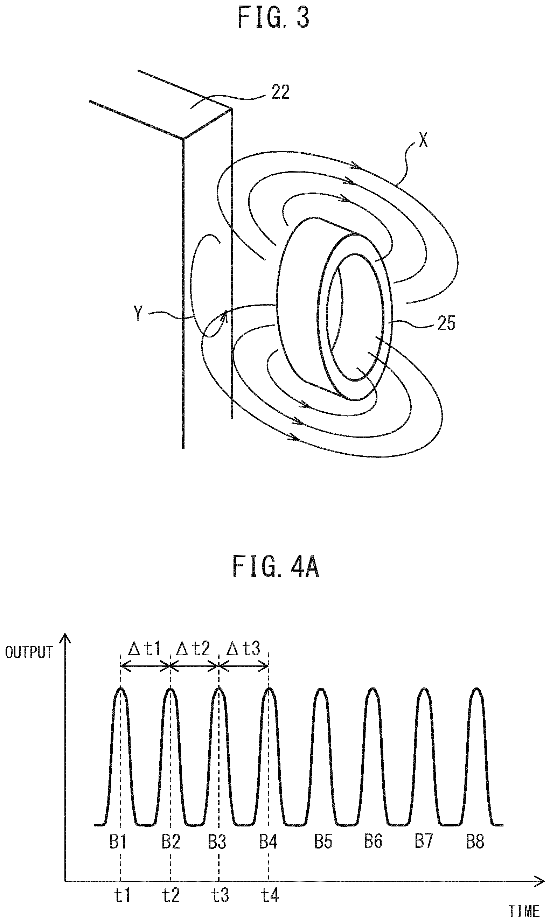

Further, in the present embodiment, as the passage detection sensor 5, an eddy current sensor is used. An eddy current sensor is a sensor outputting a voltage value corresponding to a distance between a sensor detecting part and a metal substance being measured. Below, referring to FIG. 3, the principle of detection of an eddy current sensor will be simply explained.

The eddy current sensor 5 has a coil 25 generating a magnetic field by an AC exciting current at its detecting part. If a blade 22 passes the magnetic field X which the coil 25 generates, an eddy current Y will be generated at the blade 22 so as to cancel out the magnetic field generated by the coil 25. The strength of the magnetic field X changes depending on the eddy current generated at the blade 22. As a result, the value of the current flowing through the coil 25 changes. Therefore, the eddy current sensor 5 detects the passage of a blade 22 by detecting a change in the value of voltage due to a change in the value of the current flowing through the coil 25. Specifically, the time when the output value of the eddy current sensor 5 peaks is judged as the time when a blade 22 passes in front of the detecting part of the eddy current sensor 5 (that is, predetermined angular position inside housing 3).

Note that, as the passage detection sensor 5 for detecting the passage of a blade 22, any sensor may be used so long as able to detect the passage of a blade 22. As such a sensor, for example, a magnetic pickup (MPU) sensor may be mentioned. An MPU sensor is a sensor having a magnet and detection coil in the detecting part. In such an MPU sensor, if the magnetic body constituted by a blade approaches or moves away from the MPU sensor, the magnetic flux running through the detection coil will change and, along with this, the electromotive force induced at the detection coil will change. Due to this, it is possible to detect the passage of a blade 22 in front of the detecting part of the MPU sensor. Note that, in the following explanation, the case of use of an eddy current sensor as the passage detection sensor 5 will be explained.

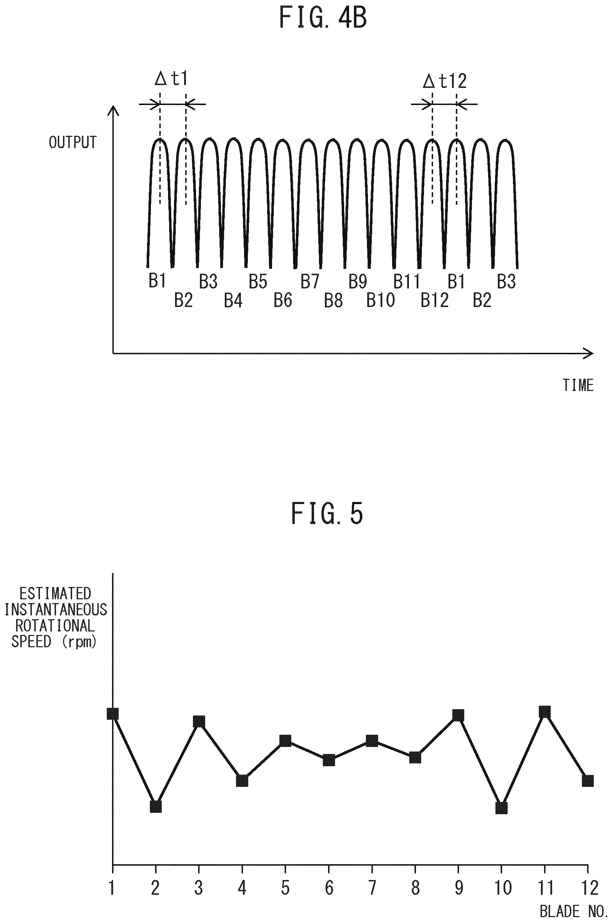

FIG. 4A and FIG. 4B are views showing trends in the output value (voltage value) of the passage detection sensor 5 in the case of using an eddy current sensor as the passage detection sensor 5. FIG. 4A shows the trend in the output value in the case where the rotational speed of the compressor wheel 2 is relatively slow (for example, 200,000 rpm), while FIG. 4B shows the trend in the output value in the case where the rotational speed of the compressor wheel 2 is relatively fast (for example, 400,000 rpm).

As explained above, when using an eddy current sensor as the passage detection sensor 5, the shorter the distance between the detecting part of the passage detection sensor 5 and the object passing in front of it (in the present embodiment, a blade 22), the larger the output value. Therefore, if a blade 22 passes in front of the detecting part of the passage detection sensor 5, the output value of the passage detection sensor 5 rapidly increases. Accordingly, a spike-like change in the output in FIG. 4A and FIG. 4B means that a blade 22 has passed in front. Note that, B1 to B12 in FIG. 4A and FIG. 4B show numbers of the blades 22 passing in front of the detecting part of the passage detection sensor 5.

As shown in FIG. 4A, if the rotational speed of the compressor wheel 2 is relatively slow, the output value of the passage detection sensor 5 will rapidly rise and fall along with the passage of a blade 22 while will be maintained constant at a low value in the time period between passages of two adjoining blades 22.

On the other hand, as shown in FIG. 4B, if the rotational speed of the compressor wheel 2 is relatively fast, before the output value of the eddy current sensor which had risen along with passage of one blade 22 completely falls, the output value will start to rise along with passage of the next blade 22. Therefore, as shown in FIG. 4B, even in the time period between passages of two adjoining blades 22, the output value of the passage detection sensor 5 will not be maintained constant. However, even in this case, the timing at which the output value of the passage detection sensor 5 becomes maximum shows the passage of a blade 22, so it is possible to accurately detect the passage of a blade 22 in front of the detecting part of the passage detection sensor 5.

## One Example of Estimation of Rotational Speed of Compressor Wheel Using Passage Detection Sensor

In this way, the passage detection sensor 5 can accurately detect the passage of a blade 22 in front of the detecting part of the passage detection sensor 5. For this reason, as one example of the method of estimation of the rotational speed of the compressor wheel 2 using the passage detection sensor 5, the method of estimating the rotational speed of the compressor wheel 2 based on the time interval from when any one blade (below, a "reference blade") among the blades 22 passes in front of the passage detection sensor 5 to when a blade passes in front of the passage detection sensor 5 after the reference blade, every time a blade 22 passes in front of the passage detection sensor 5 may be mentioned.

Below, referring to FIG. 4A, one example of the method of estimation of the rotational speed of the compressor wheel 2 using this passage detection sensor 5 will be explained.

In the example shown in FIG. 4A, the time when the first blade B 1 passes in front of the passage detection sensor 5 and causes the output of the passage detection sensor 5 to peak is defined as the time t1. Similarly, the times when the second blade B2, third blade B3, and fourth blade B4 pass in front of the passage detection sensor 5 and cause the output of the passage detection sensor 5 to peak are defined respectively as the times t2, t3, and t4.

In this case, the time interval $\Delta t1$ from when the first blade B 1 passes in front of the passage detection sensor 5 to when the second blade B2 passes in front of it is expressed as t2-t1. On the other hand, in the present embodiment, 12 blades are provided at equal intervals, so the angular interval between the first blade B1 and the second blade B2 basically becomes $(2\pi/12)$ [rad]. Therefore, the instantaneous angular velocity co 1 [rad/s] of the compressor wheel 2 from when the first blade B1 passes in front of the passage detection sensor 5 to when the second blade B2 passes (below, referred to as the "instantaneous angular velocity after the first blade passes") becomes $2\pi/(12\times\Delta t1)$.

Accordingly, the instantaneous rotational speed N1 [rpm] of the compressor wheel 2 from when the first blade B1 passes in front of the passage detection sensor 5 to when the second blade B2 passes (below, referred to as the "instantaneous rotational speed after the first blade passes") becomes $(\omega 1/2\pi)\times 60$.

Similarly, the time interval $\Delta t2$ from when the second blade B2 passes in front of the passage detection sensor 5 to when the third blade B3 passes can be expressed as t3-t2, while the time interval $\Delta t3$ from when the third blade B3 passes to when the fourth blade B4 passes can be expressed as t4-t3. Therefore, the instantaneous angular velocity $\omega 2$ of the compressor wheel 2 from when the second blade B2 passes in front of the passage detection sensor 5 to when the third blade B3 passes, that is, the instantaneous angular velocity $\omega 2$ after passage of the second blade, can be calculated as $2\pi/(12\times\Delta t2)$. Similarly, the instantaneous angular velocity co3 of the compressor wheel 2 from when the third blade B3 passes in front of the passage detection sensor 5 to when the fourth blade B4 passes, that is, the instantaneous angular velocity $\omega 3$ after passage of the third blade, can be calculated as $2\pi/(12\times\Delta t3)$.

Accordingly, the instantaneous rotational speed of the compressor wheel 2 from when the second blade B2 passes in front of the passage detection sensor 5 to when the third blade B3 passes, that is, the instantaneous rotational speed N2 after passage of the second blade, can be calculated as $(\omega 2/2\pi)\times 60$. Similarly, the instantaneous rotational speed of the compressor wheel 2 from when the third blade B3 passes in front of the passage detection sensor 5 to when the fourth blade B4 passes, that is, the instantaneous rotational speed N3 after the passage of the third blade, can be calculated as $(\omega 3/2\pi)\times 60$.

Therefore, if expressing the number of a blade 22 as "i", if calculating the time interval $\Delta ti$ between when a pair of blades adjoining each other (that is, i-th blade Bi and (i+1)th blade B(i+1)) pass in front of the passage detection sensor 5 based on the output of the passage detection sensor 5, it is possible to calculate the instantaneous angular velocity coi after passage of the i-th blade Bi based on the thus calculated time $\Delta ti$ and the angular interval between the pair of adjoining blades. Further, it is possible to calculate the instantaneous rotational speed Ni after passage of the i-th blade Bi based on the thus calculated angular velocity $\omega i$.

Specifically, it is possible to calculate the instantaneous angular velocity $\omega i$ after passage of the i-th blade by dividing the angular interval $\alpha i$ between a pair of adjoining blades (i-th blade Bi and (i+1)th blade B(i+1)) by the calculated time interval $\Delta ti$ of passage of the blades by the following formula (1). Accordingly, it is possible to calculate the instantaneous rotational speed Ni after passage of the i-th blade by the following formula (2):

$$\omega i = \alpha i / \Delta ti \ \dots (1)$$

$$Ni = (\omega i/2\pi)\times 60 = (\alpha i\times 60)/(2\pi\times\Delta ti) \ \dots (2)$$

Further, if, like in the present embodiment, in the case of a compressor wheel 2 provided with blades 22 at equal intervals in the circumferential direction, if the total number of blades 22 is "p", the angular interval $\alpha i$ can be expressed as $(2\pi/p)$. Therefore, the instantane-

ous rotational speed Ni after passage of the i-th blade can be calculated by the following formula (3) based on the time interval $\Delta ti$ from when the i-th blade Bi passes in front of the passage detection sensor 5 to when the (i+1)th blade B(i+1) passes:

$$Ni = 60/(p\times\Delta ti) \ \dots (3)$$

In this regard, however, when using such a method of estimation to estimate the rotational speed of the compressor wheel 2, that is, when estimating the rotational speed of the compressor wheel 2 based on the time interval from when a reference blade passes in front of the passage detection sensor 5 to when a blade passes in front of the passage detection sensor 5 after the reference blade, it was learned that an error (estimation error) occurs between the actual rotational speed and the estimated rotational speed.

Shape Error of Blade

FIG. 5 is a view showing an example of the result of estimation when estimating the rotational speed of the compressor wheel 2 by the above method of estimation in the case where the compressor wheel 2 is made to rotate by a constant rotational speed. In FIG. 5, the abscissa indicates the number of the blade, while the ordinate indicates the instantaneous rotational speed of the compressor wheel 2 after passage of the blade of the corresponding blade number.

In the example shown in FIG. 5, the compressor wheel 2 is made to rotate by a constant rotational speed. Therefore, the instantaneous rotational speed of the compressor wheel 2 estimated at this time should become a constant value. However, in actuality, as shown in FIG. 5, the estimated instantaneous rotational speed of the compressor wheel 2 does not necessarily become constant after passage of a blade. For example, in the example shown in FIG. 5, the instantaneous rotational speed of the compressor wheel 2 after passage of the second blade becomes slower than the instantaneous rotational speed of the compressor wheel 2 after passage of the first blade.

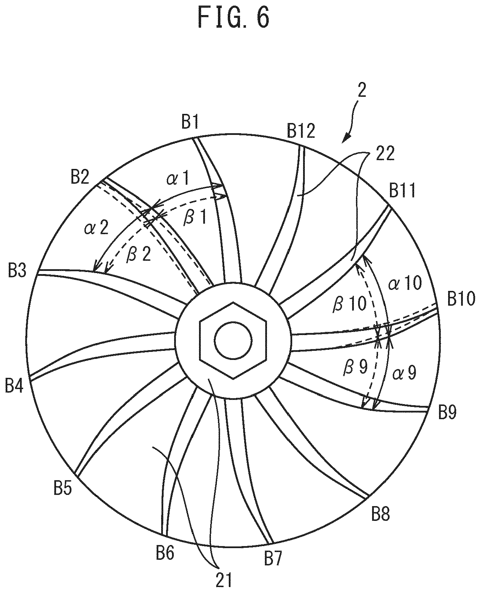

The inventors of the present application engaged in intensive research regarding this whereupon they found that shape error of the blades 22 of the compressor wheel 2 (error within range of shape tolerance) may be considered as one of the reasons why the estimated instantaneous rotational speed of the compressor wheel 2 does not become a constant value. That is, blades 22 of the compressor wheel 2 sometimes suffer from shape error due to manufacturing error and aging. The inventors found that this shape error causes error in the estimated instantaneous rotational speed of the compressor wheel 2. Below, referring to FIG. 6, the relationship between the estimated instantaneous rotational speed of the compressor wheel 2 and the shape error of the blades 22 will be explained.

FIG. 6 is a plan view similar to FIG. 2 schematically showing the compressor wheel 2. The broken lines in FIG. 6 show the shapes of blades 22 of the compressor wheel 2 when the blades 22 are formed as designed. In the example shown in FIG. 6, the plurality of blades 22 are designed so as to become equal intervals and the same shapes. Further, in the example shown in FIG. 6, it will be understood that the second blade B2 and the 10th blade B10 have shape error with respect to the design blade shapes. Specifically, the second blade B2 is shaped shifted to the first blade side in the circumferential direction compared with its design shape. Further, the 10th blade B10 is shaped shifted to the outside in the diametrical direction compared with its design shape.

If error occurs in the blade shape in this way, the angular interval $\alpha$ between blades changes. In the example shown in FIG. 6, the shape of the second blade B2 is shifted in the circumferential direction compared with the design shape. As a result, in the region facing the passage detection sensor 5, the actual angular interval between the first blade B1 and the second blade B2 becomes a value $\alpha1$ smaller than the design value $\beta1$. Conversely, the actual angular interval between the second blade B2 and the third blade B3 becomes a value a2 larger than the design value $\beta2$. Therefore, the actual angular interval $\alpha1$ between the first blade B1 and the second blade B2 is smaller than the actual angular interval $\alpha2$ between the second blade B2 and the third blade B3.

On the other hand, in estimating the rotational speed, not the actual angular interval between blades, but the design value is used. For this reason, even if the compressor wheel 2 rotates by a constant rotational speed, the instantaneous rotational speed N1 of the compressor wheel 2 based on the time interval $\Delta t1$ from the first blade B1 to the second blade B2 is calculated as faster than the instantaneous rotational speed N2 of the compressor wheel 2 based on the time interval $\Delta t2$ from the second blade B2 to the third blade B3. As a result, as shown in FIG. 5, the instantaneous rotational speed after passage of the first blade B1 is calculated as faster than the instantaneous rotational speed after passage of the second blade B2.

Further, in the example shown in FIG. 6, the 10th blade B10 is shaped shifted to the outside in the circumferential direction compared with its design shape. As a result, the actual angular interval between the ninth blade B9 and the 10th blade B10 becomes a value $\alpha9$ smaller than the design value $\beta9$. Further, the actual angular interval between the 10th blade B10 and the 11th blade B11 becomes a value $\alpha10$ larger than the design value $\beta10$. As a result, even if the compressor wheel 2 rotates by a constant rotational angle, the instantaneous rotational speed after passage of the ninth blade B9 is calculated as faster than the instantaneous rotational speed after passage of the 10th blade B10.

Note that, FIG. 6 shows an example of shape error where the shape of a blade 22 shifts overall in the circumferential direction or diametrical direction. However, the shape error which occurs in a blade 22 also includes error in the axial direction of the compressor wheel 2, error in the curved shape of a blade, and various other error besides the above shape error. Further, if such shape error occurs in the blade 22, it becomes no longer possible to suitably detect the rotational speed between blades.

Measure Against Estimation Error Due to Shape Error

As a measure against estimation error due to shape error of the blades 22, rather than, like in the above method of estimation, estimating the rotational speed of the compressor wheel 2 based on the time interval from when a reference blade passes in front of the passage detection sensor 5 to when a blade passes in front of the passage detection sensor 5 after the reference blade, that is, the time required for passage of adjoining blades, it may be considered to estimate the rotational speed of the compressor wheel 2 based on the time interval from when a reference blade passes in front of the passage detection sensor 5 to when the reference blade next passes in front of the passage detection sensor 5, that is, the time required for the compressor wheel 2 to turn once.

By estimating the rotational speed of the compressor wheel 2 based on the time required for the compressor wheel 2 to turn once in this way, even if shape error occurs in a blade, it is possible to estimate the rotational speed of the compressor wheel 2 without being affected by that shape error. For example, when making the reference blade the first blade B1, as in the example shown in FIG. 6, even if the actual angular interval $\alpha1$ between the first blade B1 and the second blade B2 and the actual angular interval $\alpha9$ between the ninth blade B9 and the 10th blade B10 respectively differ from their design values $\beta1$ and $\beta9$, the angular interval from the first blade B1 to the first blade B1 is always constant at $2\pi$ [rad]. Further, even if the first blade B1 itself changes in shape, the angular interval from the first blade B1 to the first blade B1 is always constant at $2\pi$ [rad].

For this reason, by estimating the rotational speed of the compressor wheel 2 based on the time required for the compressor wheel 2 to turn once, it is possible to estimate the rotational speed of the compressor wheel 2 without being affected by shape error of the blades 22.

However, even if estimating the rotational speed of the compressor wheel 2 based on the time required for the compressor wheel 2 to turn once in this way, it was learned that estimation error still occurs between the actual rotational speed and the estimated rotational speed. Further, it was learned that this estimation error tends to become larger the higher the actual rotational speed of the compressor wheel 2.

Sampling Error

To estimate the rotational speed of the compressor wheel 2, it is necessary to calculate by the amp unit 6 the time interval $\Delta t$ between blades whose angular interval is known in advance. For example, when estimating the rotational speed of the compressor wheel 2 based on the time required for the compressor wheel 2 to turn once, the time from when the i-th blade Bi passes in front of the passage detection sensor 5 to when the i-th blade Bi next passes becomes the time interval $\Delta t$ between blades.

However, the amp unit 6 reads the output value of the passage detection sensor 5 by a preset predetermined sampling period $t_{smp}$ and detects a blade 22 passing in front of the detecting part of the passage detection sensor 5 based on the read output value. For this reason, sometimes deviation occurs between the time interval $\Delta t$ between blades calculated by the amp unit 6 and the actual time interval $\Delta tr$ between blades.

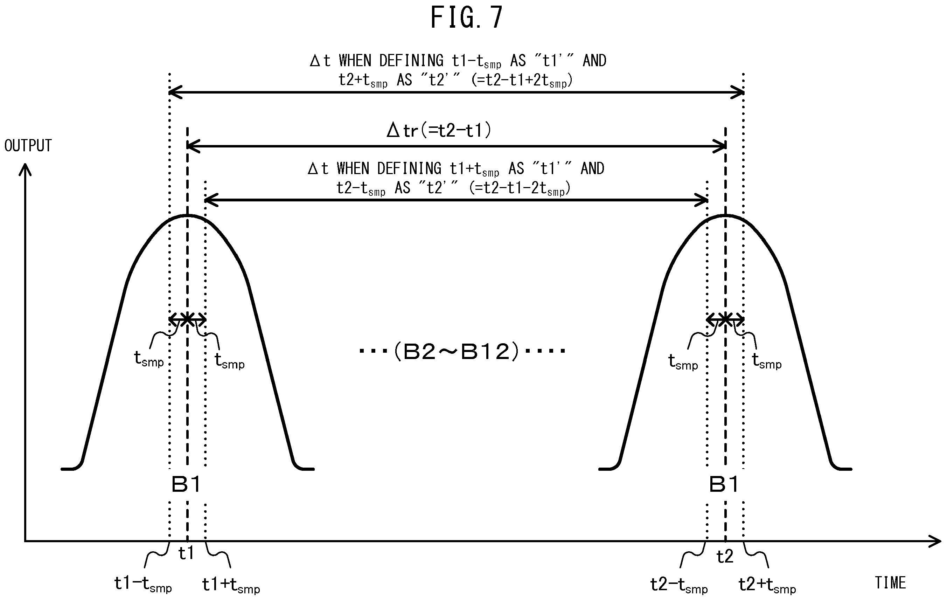

FIG. 7 is a view explaining the reason why deviation occurs between the time interval $\Delta t$ between blades calculated by the amp unit 6 and the actual time interval $\Delta tr$ between blades and is a view showing the trend in output of the passage detection sensor 5. In the example shown in FIG. 7, the time when the first blade B 1 first actually passes in front of the detecting part of the passage detection sensor 5 and the output of the passage detection sensor 5 peaks is defined as the "time t1". Further, the time when the first blade B1 next actually passes in front of the detecting part of the passage detection sensor 5 and the output of the passage detection sensor 5 peaks is defined as the "time t2".

In this case, the actual time interval $\Delta tr$ between blades from when the first blade B1 passes in front of the passage detection sensor 5 to when the first blade B1 next passes is t2-t1.

However, the amp unit 6 reads the output value of the passage detection sensor 5 at a preset predetermined sampling period $t_{smp}$. For this reason, the time when the amp unit 6 judges that the first blade B1 first passes in front of the passage detection sensor 5 becomes a time deviated from the time t1 at which the output of the passage detection sensor 5 actually peaks by a maximum of the sampling period $t_{smp}$ to the front or rear. That is, the time when the amp unit 6 judges that the first blade B1 has first passed in front of the passage detection sensor 5 becomes any time t1' in the range from the time $(t1-t_{smp})$ to the time $(t1+t_{smp})$.

Further, similarly, the time when the amp unit 6 judges that the first blade B1 has next passed in front of the passage detection sensor 5 becomes a time deviated from the time t2 at which the output of the passage detection sensor 5 actually peaks by a maximum of the sampling period $t_{smp}$ to the front or rear. That is, the time when the amp unit 6 judges that the first blade B1 has next passed in front of the passage detection sensor 5 becomes any time t2' in the range from the time $(t2-t_{smp})$ to the time $(t2+t_{smp})$.

Therefore, the amp unit 6 calculates the time interval $\Delta t$ between blades from when the first blade B1 passes in front of the passage detection sensor 5 to when the first blade B1 next passes as t2'-t1'. For this reason, at the maximum an error of $(2 \times t_{smp})$ (absolute error) occurs between the time interval $\Delta t$ $(=t2'-tl')$ between blades calculated by the amp unit 6 and the actual time interval $\Delta tr$ $(=t2-t1)$ between blades.

Therefore, the time interval $\Delta t$ between blades calculated by the amp unit 6 includes, as the ratio of error with respect to the actual time interval (real value) $\Delta tr$ between blades, a sampling error (relative error) E [%] represented by the following formula (4):

$$E = \{(2 \times t_{smp})/(\Delta tr)\} \times 100 \ldots (4)$$

Further, the greater this sampling error E becomes, the lower the precision of the time interval $\Delta t$ between blades calculated by the amp unit 6. Therefore, the greater the sampling error E becomes, the easier it is for an estimation error to occur and, further, the easier it is for the estimation error to become larger. The actual time interval $\Delta tr$ between blades becomes shorter the higher the actual rotational speed of the compressor wheel 2. Accordingly, the higher the actual rotational speed of the compressor wheel 2, the larger the sampling error E also becomes, so the larger the estimation error also becomes.

Therefore, to precisely estimate the rotational speed of the compressor wheel 2, it is necessary to consider not only the shape error of the blades 22 of the compressor wheel 2, but also the sampling error E.

Measure Against Estimation Error Due to Sampling Error

As one method of reducing the sampling error E to make the sampling error E not more than a predetermined allowable error $E_{allow}$ (for example 1%), shortening the sampling period $t_{smp}$ may be mentioned. However, shortening the sampling period $t_{smp}$ requires raising the processing ability of the CPU of the amp unit 6, so the cost increases.

Therefore, in the present embodiment, it is made possible to lengthen the time interval $\Delta t$ between blades required for estimating the rotational speed of the compressor wheel 2 the higher the actual rotational speed of the compressor wheel 2 so that the sampling error E becomes not more than the allowable error $E_{allow}$ regardless of the actual rotational speed of the compressor wheel 2.

Specifically, the elapsed time $t_e$ from when the reference blade passes in front of the passage detection sensor 5 once is calculated as the reference blade passage time $t_m$ each time the reference blade passes in front of the passage detection sensor 5 once. When the reference blade passage time becomes the threshold

value $t_{thres}$ or more, the rotational speed of the compressor wheel 2 is calculated. Note that the threshold value $t_{thres}$ can be selected as any value from among values satisfying the condition of the following formula (5) obtained by modifying the above-mentioned formula (4) and can be set based on the sampling period $t_{smp}$.

$$t_{thres} \geq \{(2 \times t_{smp})/E_{allow}\} \times 100 \ldots (5)$$

Due to this, the time required for the compressor wheel 2 to turn once from when the reference blade passes in front of the passage detection sensor 5 once is first calculated as the reference blade passage time $t_m$. Further, if this reference blade passage time $t_m$ is the threshold value $t_{thres}$ or more, the sampling error E becomes not more than the allowable error $E_{allow}$, so the rotational speed of the compressor wheel 2 is estimated.

On the other hand, if this reference blade passage time $t_m$ is less than the threshold value $t_{thres}$, the sampling error E becomes larger than the allowable error $E_{allow}$, so at the time when the compressor wheel 2 turns once, the rotational speed of the compressor wheel 2 is not estimated. The elapsed time $t_e$ until the compressor wheel 2 turns one more time from that point of time is next calculated as the reference blade passage time $t_m$. That is, the time required for the compressor wheel 2 to turn two times from when the reference blade passes in front of the passage detection sensor 5 once is next calculated as the reference blade passage time $t_m$.

Further, this reference blade passage time $t_m$ is again compared with the threshold value $t_{thres}$. If the reference blade passage time $t_m$ is the threshold value $t_{thres}$ or more, the rotational speed of the compressor wheel 2 is estimated. On the other hand, if the reference blade passage time $t_m$ is less than the threshold value $t_{thres}$, the elapsed time $t_e$ until the compressor wheel 2 turns another time from when it turns two times is next calculated as the reference blade passage time $t_m$. That is, the time required for the compressor wheel 2 to turn three times after the reference blade passes in front of the passage detection sensor 5 once is next calculated as the reference blade passage time $t_m$. Further, this reference blade passage time $t_m$ is again compared with the threshold value $t_{thres}$. Similar processing is repeated until the reference blade passage time $t_m$ calculated in this way becomes the threshold value $t_{thres}$ or more.

Due to this, it is possible to estimate the rotational speed of the compressor wheel 2 constantly in a state with the sampling error E kept at not more than the allowable error $E_{allow}$ regardless of the actual rotational speed of the compressor wheel 2. Further, it is possible to estimate the rotational speed of the compressor wheel 2 without being affected by shape error of the blades 22. Therefore, the rotational speed of the compressor wheel 2 can be precisely estimated.

Control for Estimation of Rotational Speed of Compressor Wheel According to First Embodiment

Below, the control for estimation of the rotational speed of the compressor wheel 2 according to the present embodiment will be explained.

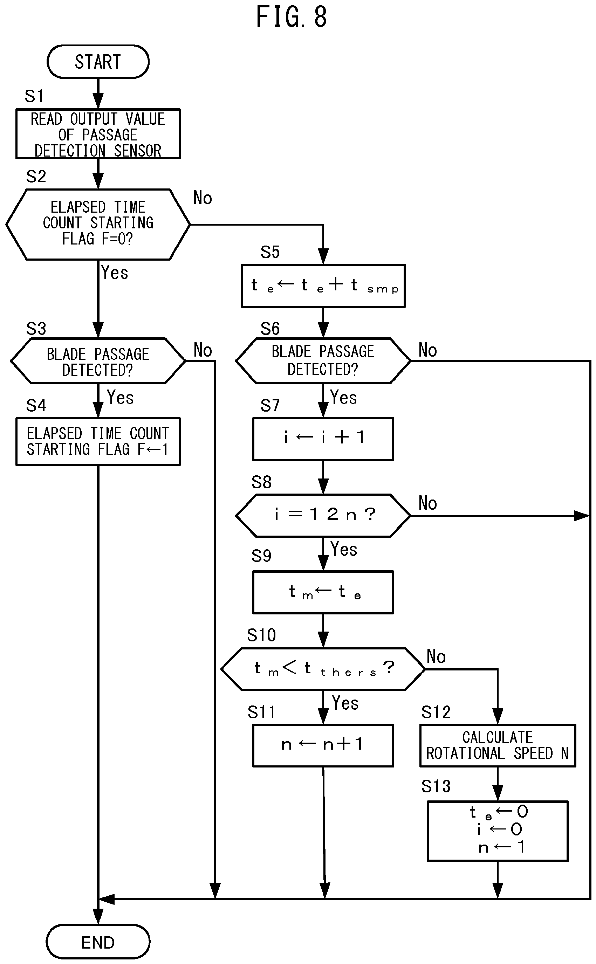

FIG. 8 is a flow chart for explaining the control for estimation of the rotational speed of the compressor wheel 2 according to the present embodiment. The amp unit 6 repeatedly performs this routine by a predetermined processing period (=sampling period $t_{smp}$).

At step S1, the amp unit 6 reads the output value of the passage detection sensor 5.

At step S2, the amp unit 6 judges if the elapsed time count start flag F has been set to 0. The elapsed time count start flag F is a flag with an initial value set to "0". When the elapsed time count start flag F is set to "0", it is set to "1" if passage of a blade 22 is detected by the passage detection sensor 5. Further, if the rotational speed of the compressor wheel 2 is estimated, it is again returned to "0". The amp unit 6 proceeds to the processing of step S2 if the elapsed time count start flag F is set to "0". On the other hand, the amp unit 6 proceeds to the processing of step S5 if the elapsed time count start flag is set to "1".

At step S3, the amp unit 6 judges if the passage of a blade 22 has been detected. The blade 22 for which passage is detected at this step S3 is any one blade among the plurality of blades, that is, becomes a reference blade. The amp unit 6 proceeds to the processing of step S4 if passage of a blade 22 is detected. On the other hand, the amp unit 6 ends the current processing if passage of a blade 22 is not detected.

At step S4, the amp unit 6 sets the elapsed time count start flag F to "1" and starts to count the elapsed time $t_e$ from when the reference blade passed in front of the detecting part of the passage detection sensor 5.

At step S5, the amp unit 6 calculates the previous value of the elapsed time $t_e$ plus the sampling period $t_{smp}$ as the elapsed time $t_e$. Note that, the initial value of the elapsed time $t_e$ is "0".

At step S6, the amp unit 6 judges if the passage detection sensor 5 has detected passage of a blade 22. The amp unit 6 proceeds to the processing of step S7 if the passage detection sensor 5 detects passage of a blade 22. On the other hand, the amp unit 6 ends the current processing if the passage detection sensor 5 does not detect passage of a blade 22.

At step S7, the amp unit 6 calculates the number of times "i" of blade passage from when a reference blade passed in front of the detecting part of the passage detection sensor 5. Specifically, the amp unit 6 calculates the previous value of the number of times "i" of blade passage plus "1" as the number of times "i" of blade passage. Note that, the initial value of the number of times "i" of blade passage is "0".

At step S8, the amp unit 6 judges if the blade 22 for which passage was detected at step S6 is a reference blade. Specifically, the amp unit 6 judges if the number of times "i" of blade passage is a value of the total number of the blades (in the present embodiment, 12) multiplied with a positive integer "n". Note that, the initial value of the positive integer "n" is "1". Further, this positive integer "n" corresponds to the number of times of rotation of the compressor wheel 2 from when the reference blade first passed in front of the detecting part of the passage detection sensor 5. The amp unit 6 proceeds to the processing of step S9 if the blade 22 for which passage is detected at step S6 is the reference blade. On the other hand, the amp unit 6 ends the current processing if the blade 22 for which passage is detected at step S6 is not the reference blade.

At step S9, the amp unit 6 sets the elapsed time $t_e$ calculated at step S5 as the reference blade passage time $t_m$. That is, the amp unit 6 sets the elapsed time $t_e$ from when detecting the reference blade first passing in front of the detecting part of the passage detection sensor 5 as the reference blade passage time $t_m$ each time the reference blade passes in front of the detecting part of the passage detection sensor 5 a predetermined number of times. Note that, in the present embodiment, this predetermined number of times is one time, but the disclosure is not limited to one time. It may also be made a plurality of times.

At step S10, the amp unit 6 judges if the reference blade passage time $t_m$ is less than the threshold value $t_{thres}$. The amp unit 6 proceeds to the processing of step S11 if the reference blade passage time $t_m$ is less than the threshold value $t_{thres}$. On the other hand, the amp unit 6 proceeds to the processing of step S12 if the reference blade passage time $t_m$ is the threshold value $t_{thres}$ or more.

At step S11, the amp unit 6 adds "1" to the positive integer "n" to update the value of the positive integer "n". Due to this, when the reference blade passage time $t_m$ is less than the threshold value $t_{thres}$, the compressor wheel 2 is made to turn another time and the reference blade passage time $t_m$ is reset.

At step S12, the amp unit 6 estimates the rotational speed [rpm] of the compressor wheel based on the reference blade passage time $t_m$ and the positive integer "n" corresponding to the number of times the reference blade passes in front of the detecting part of the passage detection sensor 5 (number of times compressor wheel 2 turns during reference blade passage time $t_m$). Specifically, the reference blade passage time $t_m$ and the positive integer "n" are entered into the following formula (6) to estimate the rotational speed N of the compressor wheel:

$$N = (n/t_m) \times 60 \ \ldots (6)$$

At step S13, the amp unit 6 returns the elapsed time $t_e$ and number of times "i" of passage of a blade to their initial values of "0" and returns the positive integer "n" to its initial value of "1".

According to the present embodiment explained above, based on the output value of the passage detection sensor 5 (detecting part) detecting the passage of a blade 22 of a compressor wheel 2 (rotating body) having a plurality of blades 22 over a predetermined position in a housing 3 holding the compressor wheel 2, the amp unit 6 estimating the rotational speed of the compressor wheel 2 (rotational speed estimating device) calculates the elapsed time $t_e$ from when any one blade (reference blade) among the plurality of blades 22 passes a predetermined position once as the reference blade passage time $t_m$ every time the any one blade passes a predetermined position a predetermined number of times and, when the reference blade passage time $t_m$ becomes a threshold value $t_{thres}$ or more, estimates the rotational speed of the compressor wheel 2 based on the reference blade passage time $t_m$ and the number of times "n" the any one blade passes the predetermined position during the reference blade passage time $t_m$.

For this reason, it is possible to estimate the rotational speed of the compressor wheel 2 in a state where the sampling error E is constantly made not more than a predetermined error regardless of the actual rotational speed of the compressor wheel 2. Further, it is possible to estimate the rotational speed of the compressor wheel 2 without being affected by shape error of the blades 22. Therefore, it is possible to precisely estimate the rotational speed of the compressor wheel 2.

In particular, the amp unit 6 according to the present embodiment is configured to acquire the output value of the passage detection sensor 5 by a predetermined sampling period. The threshold value $t_{thres}$ is made a fixed value preset based on the sampling period so that the sampling error becomes not more than a predetermined allowable error $E_{allow}$.

For this reason, it is possible to estimate the rotational speed of the compressor wheel 2 in a state where the sampling error E is constantly made not more than the allowable error $E_{allow}$ and possible to make the sampling error a desired error or less.

Second Embodiment

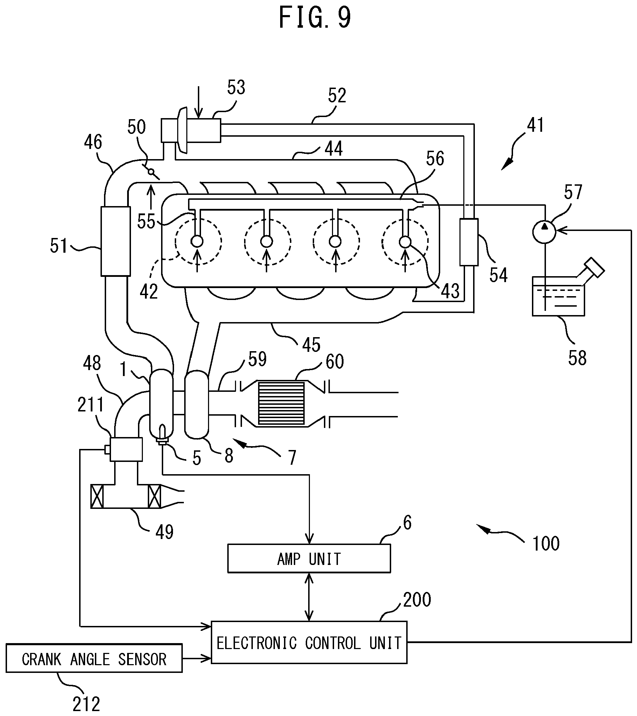

Next, referring to FIG. 9, an internal combustion engine 100 in which a rotational speed estimating device according to a second embodiment is used will be explained. The rotational speed estimating device according to the second embodiment differs from the first embodiment on the point of making the threshold value $t_{thres}$ variable in accordance with the engine rotational speed of the internal combustion engine when estimating the rotational speed of the compressor wheel 2. Below, this point of difference will be focused on in the explanation.

FIG. 9 is a schematic overall view of an internal combustion engine 100.

The internal combustion engine 100 is a so-called "multicylinder internal combustion engine" having a plurality of cylinders. In the present embodiment, the internal combustion engine 100 has four cylinders, but the number of cylinders is not limited to four so long as a plurality. The internal combustion engine 100 is provided with an engine body 41 for burning fuel inside it to generate power for driving for example a vehicle etc. and an electronic control unit 200 for controlling the internal combustion engine 100. The engine body 41 includes combustion chambers 42 formed at the cylinders, electronic control type fuel injectors 43 for injecting fuel inside the combustion chambers 42, an intake manifold 44 for introducing intake air inside the combustion chambers 42, and an exhaust manifold 45 for discharging exhaust from inside the combustion chambers 42.

The fuel injectors 43 are connected to a common rail 56 through fuel supply lines 55. The common rail 56 is connected to the fuel tank 58 through an electronic control type fuel pump 57 able to be changed in amount of discharge. The fuel stored inside the fuel tank 58 is supplied by the fuel pump 57 to the inside of the common rail 56. The fuel supplied to the inside of the common rail 56 is supplied through the fuel supply lines 55 to the fuel injectors 43.

The intake manifold 44 is connected through the intake duct 46 to the outlet of the compressor 1 of the exhaust turbocharger 7. The inlet of the compressor 1 is connected through an intake pipe 48 to an air cleaner 49. The intake pipe 48 is provided with an air flow meter 211 for detecting the amount of intake air. Inside the intake duct 46, an electric control type throttle valve 50 driven by a step motor is arranged. Around the intake duct 46, a cooling device 51 is arranged for cooling the intake air flowing through the inside of the intake duct 46.

The exhaust manifold 45 is connected to an inlet of the exhaust turbine 8 of the exhaust turbocharger 7. The outlet of the exhaust turbine 8 is connected to an exhaust pipe 59 at which a catalytic converter 60 is provided. The exhaust manifold 45 and the intake manifold 44 are connected with each other through an EGR passage 52 for performing exhaust gas recirculation (below, referred to as "EGR"). Inside the EGR passage 52, an electronic control type EGR control valve 53 is arranged. Around the EGR passage 52, an EGR cooler 54 is arranged for cooling the EGR gas flowing through the inside of the EGR passage 52.

The catalytic converter 60 uses an exhaust purification catalyst supported on a support to remove harmful substances in the exhaust discharged from the combustion chambers 42 then discharges the exhaust to the outside air.

The electronic control unit 200 is comprised of a digital computer provided with components connected with each other by a bidirectional bus such as a ROM (read only memory), RAM (random access memory), CPU (microprocessor), input port, and output port.

The electronic control unit 200 receives as input through an input port an output signal of the above-mentioned air flow meter 211 and, as a signal for calculating the engine rotational speed, an output signal of a crank angle sensor 212 generating an output pulse each time a crankshaft of the engine body 41 rotates by for example 15° etc. In this way, the electronic control unit 200 receives as input through the output port the output signals of various types of sensors required for control of the internal combustion engine 100.

Further, the electronic control unit 200 is electrically connected to the fuel injectors 43, step motor of the throttle valve 50, EGR control valve 53, fuel pump 57, and other control parts through the output port.

Further, the electronic control unit 200 is connected with the amp unit 6 by a CAN (controller area network) communication line and is designed to be able to send and receive data by CAN communication.

## Calculation of Kinetic Energy of Rotating Body of Exhaust Turbocharger

In this regard, as components rotating inside the exhaust turbocharger 7, in addition to the above-mentioned compressor wheel 2, a turbine wheel (not shown) of the exhaust turbine 8 and a shaft 4 connecting these compressor wheel 2 and turbine wheel may be mentioned. Therefore, the compressor wheel 2, turbine wheel, and shaft 4 configure the rotating body of the exhaust turbocharger 7.

The kinetic energy KE of the rotating body of the exhaust turbocharger 7 is calculated based on the following formula (7):

$$KE = I \times \omega^2 / 2 \ \ldots (7)$$

In formula (7), I is the inertia moment of the rotating body of the exhaust turbocharger 7, while $\omega$ is the angular velocity of the rotating body of the exhaust turbocharger 7. The inertia moment I of the rotating body of the exhaust turbocharger 7 is found by calculation from the shape and material of the rotating body. The angular velocity of the rotating body of the exhaust turbocharger 7 is equal to the angular velocity of the compressor wheel 2. Further, the angular velocity of the compressor wheel 2 can be calculated from the rotational speed of the compressor wheel 2 estimated by the amp unit 6. Therefore, by finding the rotational speed N of the compressor wheel 2, it is possible to calculate the kinetic energy of the rotating body of the exhaust turbocharger 7.

Therefore, in the present embodiment, during use of the exhaust turbocharger 7, the angular velocity $\omega$ of the compressor wheel 2 is calculated based on the rotational speed N of the compressor wheel 2 estimated by the amp unit 6 and the kinetic energy of the rotating body of the exhaust turbocharger 7 is calculated by the above formula (7) based on the calculated angular velocity $\omega$. Due to the amp unit 6, it is possible to accurately estimate the rotational speed N of the compressor wheel 2 without being affected by the shape error of the compressor wheel 2 and, further, in the state keeping the sampling error at not more than the allowable error, so it is possible to accurately calculate the kinetic energy of the rotating body of the exhaust turbocharger 7.

Calculation of Variation Among Cylinders

If, in this way, it is possible to accurately calculate the kinetic energy of the rotating body of the exhaust turbocharger 7, it is possible to calculate the variation among cylinders relating to the combustion such as the difference in torques among cylinders of the internal combustion engine 100 based on the calculated kinetic energy. Below, the relationship between the kinetic energy of the rotating body of the exhaust turbocharger 7 and the difference in torque between cylinders will be explained.

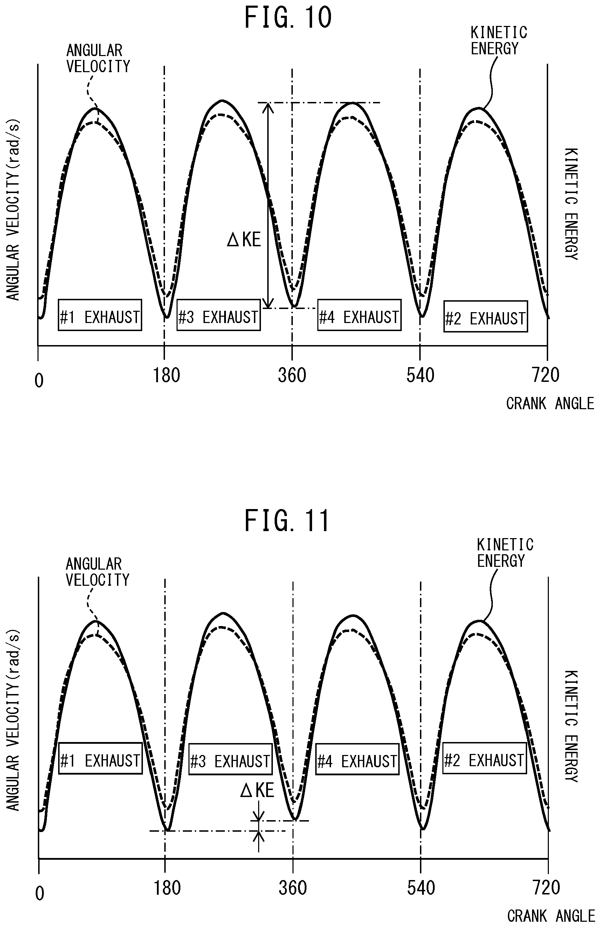

FIG. 10 is a view showing the trends in the angular velocity and kinetic energy of the rotating body of the exhaust turbocharger 7 in one cycle of the internal combustion engine 100 shown in FIG. 9. The abscissa in the figure shows the crank angle of the internal combustion engine 100. The solid line in FIG. 10 shows the kinetic energy of the rotating body of the exhaust turbocharger 7, while the broken line shows the angular velocity of the rotating body.

As shown in FIG. 10, the angular velocity of the rotating body of the exhaust turbocharger 7 changes according to the crank angle of the internal combustion engine 100. In the example shown in FIG. 10, first, if the exhaust valve of the #1 cylinder opens and exhaust starts to flow out from the combustion chamber 42, the exhaust flowing into the exhaust turbine 8 of the exhaust turbocharger 7 increases. For this reason, the angular velocity of the exhaust turbine 8 increases and along with this the angular velocity of the compressor wheel 2 also increases. Further, along with this, the kinetic energy of the rotating body of the exhaust turbocharger 7 also increases.

After that, at the end of the exhaust stroke of the #1 cylinder, the amount of flow of the exhaust flowing out from the combustion chambers 42 decreases. As a result, the angular velocity of the exhaust turbine 8 decreases and along with this the angular velocity of the compressor wheel 2 also decreases. Further, along with this, the kinetic energy of the rotating body of the exhaust turbocharger 7 decreases.

Therefore, as will be understood from FIG. 10, during the exhaust stroke of the #1 cylinder, the angular velocity of the compressor wheel 2 rises, then falls. Along with this, the kinetic energy of the rotating body of the exhaust turbocharger 7 also increases, then decreases. Further, such angular velocity and kinetic energy trend similarly in the exhaust strokes of the other cylinders as well. Therefore, as will be understood from FIG. 10, in a four-cylinder internal combustion engine 100, the angular velocity and kinetic energy greatly fluctuate up and down four times in one cycle of the internal combustion engine 100. Therefore, the angular velocity and kinetic energy fluctuate up and down a plurality of times according to the number of cylinders of the internal combustion engine 100 during one cycle of the internal combustion engine 100.

Here, if considering the example of the #4 cylinder, the amount of rise of kinetic energy of the rotating body of the exhaust turbocharger 7 (ΔKE in FIG. 10) during the exhaust stroke of the #4 cylinder is proportional to the exhaust energy possessed by the exhaust discharged from the combustion chamber 42 of the #4 cylinder. Similarly, the amounts of rise of kinetic energy of the exhaust turbocharger 7 during the exhaust strokes of the #1 cylinder, #3 cylinder, and #2 cylinder are proportional to the exhaust energies possessed by the exhausts discharged from the combustion chambers 42 of the #1 cylinder, #3 cylinder, and #2 cylinder respectively. Here, the exhaust energy of the exhaust discharged from each cylinder is basically proportional to the energy generated by combustion at the combustion chamber 42 of each cylinder, that is, the torque generated by combustion in the combustion chamber 42 of each cylinder.

Therefore, by comparing the amount of rise of kinetic energy of the rotating body of the exhaust turbocharger 7 during the exhaust stroke of each cylinder between cylinders, it is possible to detect the difference in combustion torque between cylinders. Specifically, it is possible to detect the difference in combustion torque between cylinders based on the difference (ΔKE) between the minimum value of the kinetic energy of the rotating body at the time of start of the exhaust stroke of each cylinder and the maximum value of the kinetic energy of the rotating body during the exhaust stroke of that cylinder. A cylinder with a large difference of these minimum value and maximum value is judged to be a cylinder with a large combustion torque, while a cylinder with a small difference of these minimum value and maximum value is judged to be a cylinder with a small combustion torque.

If it is possible to detect the difference in combustion torque between cylinders in this way, it is possible to adjust the amount of fuel injected into the combustion chamber 42 of each cylinder by feedback control etc., so it becomes possible to keep the difference in combustion torque between cylinders at the minimum extent.

Further, if considering the example of the #4 cylinder, the difference between the minimum value of the kinetic energy at the time of start of the exhaust stroke of the #3 cylinder with an exhaust stroke performed before the #4 cylinder and the minimum value of the kinetic energy at the time of start of the exhaust stroke of the #4 cylinder (see ΔE of FIG. 11) shows the difference in kinetic energy between these cylinders. Therefore, it is possible to detect the difference in combustion torque between cylinders based on the minimum value of the kinetic energy at the time of start of the exhaust stroke of each cylinder. Specifically, when the minimum value of the kinetic energy at the time of start of the exhaust stroke of a certain cylinder is large, the exhaust energy at that cylinder is large and accordingly it is judged that the combustion torque is large. On the other hand, when the minimum value of the kinetic energy at the time of start of the exhaust stroke of a certain cylinder is small, the exhaust energy at that cylinder is small and therefore it is judged that the combustion torque is small. Due to this, the difference in combustion torque between cylinders can be kept to the minimum extent.

In this way, in the present embodiment, the difference in combustion torque between cylinders is detected based on the difference between the minimum value of the kinetic energy of the rotating body at the time of start of the exhaust stroke of each cylinder and the maximum value of the kinetic energy of the rotating body in the exhaust stroke of the cylinder or the difference between the minimum values of the kinetic energy of the rotating body at the starts of two consecutive exhaust strokes. However, the difference in combustion torque between cylinders may also be calculated based on any parameter different from the above parameter while the kinetic energy fluctuates up and down one time during the exhaust stroke of each cylinder (for example, an intermediate value between the maximum value and minimum value etc.)

Therefore, summarizing these, the electronic control unit 200 according to the present embodiment can be said to compare values of any parameters grasped from trends in kinetic energy while the kinetic energy rises and falls once within the same cycle of the internal combustion engine 100 so as to try to estimate the variation between cylinders.

Estimation and Control of Rotational Speed of Compressor Wheel According to Second Embodiment

Here, in the first embodiment, to estimate the rotational speed of the compressor wheel 2 in a state where the sampling error E is constantly made not more than the allowable error $E_{allow}$, the rotational speed of the compressor wheel 2 was estimated when the reference blade passage time $t_m$ became a threshold value $t_{thres}$ or more.

For this reason, the estimation period at which the rotational speed of the compressor wheel 2 is estimated substantially matches the threshold value $t_{thres}$. Further, in the first embodiment, the threshold value $t_{thres}$ was made a predetermined fixed value, so the rotational speed of the compressor wheel 2 is estimated by substantially a constant estimation period.

However, the time period required for an internal combustion engine 100 to complete one cycle becomes shorter the higher the engine rotational speed of the internal combustion engine 100. For this reason, the number of data points of the rotational speed of the compressor wheel 2 estimated by the amp unit 6 while the internal combustion engine 100 is in the middle of one cycle becomes smaller the higher the engine rotational speed of the internal combustion engine 100.

The electronic control unit 200 acquires the data of the rotational speed of the compressor wheel 2 estimated by the amp unit 6 at each processing period of the electronic control unit 200 (in the present embodiment, longer than the sampling period $t_{smp}$ of the amp unit 6) from the amp unit 6 and calculates the kinetic energy of the rotating body of the exhaust turbocharger from the acquired data of the rotational speed of the compressor wheel 2. Therefore, while the internal combustion engine 100 is in the middle of one cycle, the number of data points of the kinetic energy of the rotating body of the exhaust turbocharger calculated by the electronic control unit 200 also becomes smaller the higher the engine rotational speed of the internal combustion engine 100.

The greater the number of data points of kinetic energy while the internal combustion engine 100 is in the middle of one cycle, the more precisely it is possible to estimate the trends in kinetic energy while the internal combustion engine 100 is in the middle of one cycle. Therefore, the higher the engine rotational speed of the internal combustion engine 100, the more liable it is for the precision of detection of the difference in combustion torque between cylinders to fall.

Therefore, in the present embodiment, the threshold value $t_{thres}$ is made variable in accordance with the engine rotational speed of the internal combustion engine 100. Specifically, in a range in which the sampling error E can be kept to not more than the allowable error $E_{allow}$, the threshold value $t_{thres}$ is made to become smaller the higher the engine rotational speed of the internal combustion engine 100.

Due to this, the number of data points of the rotational speed of the compressor wheel 2 estimated by the amp unit 6 while the internal combustion engine 100 is in the middle of one cycle can be made substantially the same regardless of the engine rotational speed of the internal combustion engine 100. For this reason, the precision of detection of the difference in combustion torque between cylinders can be maintained substantially constant regardless of the engine rotational speed of the internal combustion engine 100.

Alternatively, further, it is possible to keep the number of data points of the rotational speed of the compressor wheel 2 estimated by the amp unit 6 from becoming smaller when the engine rotational speed of the internal combustion engine 100 increases. For this reason, it is possible to keep the precision of detection of the difference of combustion torque between cylinders from falling when the engine rotational speed of the internal combustion engine 100 increases.

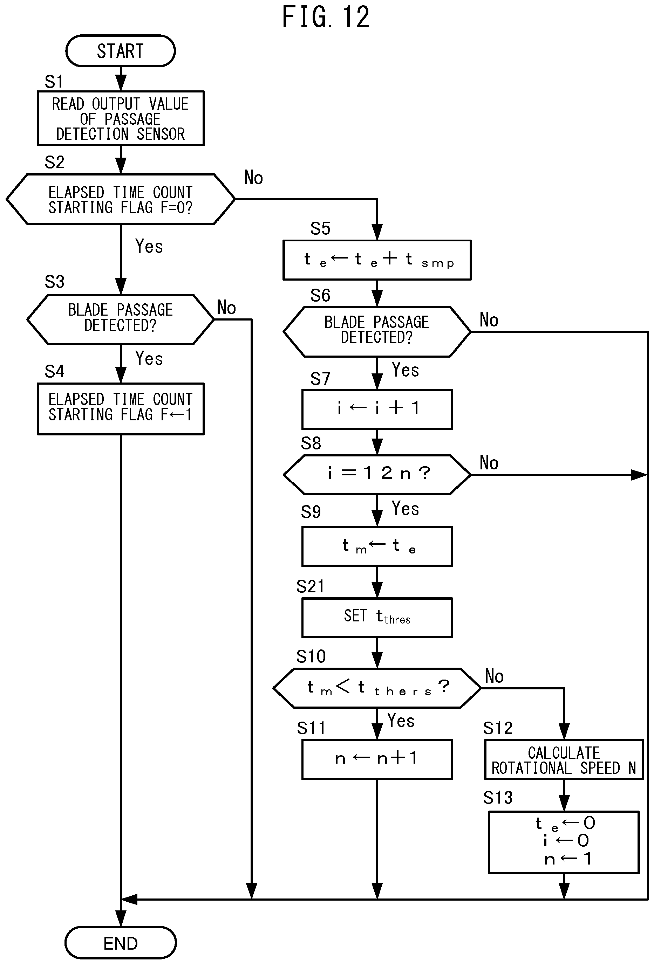

FIG. 12 is a flow chart for explaining the control for estimation of the rotational speed of the compressor wheel 2 according to the present embodiment. The amp unit 6 repeatedly executes this routine at a predetermined processing period (=sampling period $t_{smp}$).

The processing from step S1 to step S13 is similar to the first embodiment.

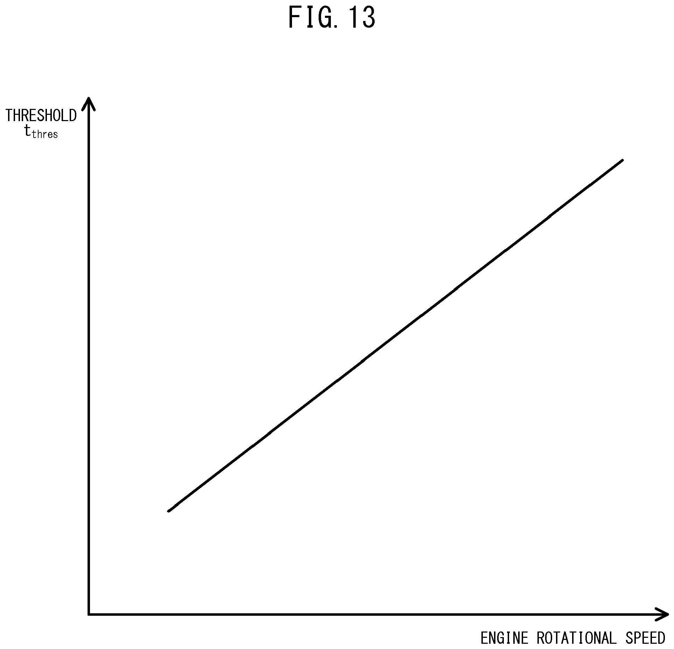

At step S21, the amp unit 6 refers to the table of FIG. 13 and sets the threshold value $t_{thres}$ based on the engine rotational speed of the internal combustion engine 100 sent from the electronic control unit.

According to the present embodiment explained above, in an internal combustion engine 100 (multicylinder internal combustion engine) in which an amp unit 6 (rotational speed estimating device) estimates the rotational speed of a compressor wheel of an exhaust turbocharger, the amp unit 6 is configured to make the threshold value smaller the higher the engine rotational speed of the internal combustion engine 100.

For this reason, the number of data points of the rotational speed of the compressor wheel 2 estimated by the amp unit 6 while the internal combustion engine 100 is in the middle of one cycle can be made substantially the same regardless of the engine rotational speed of the internal combustion engine 100. Alternatively, it is possible to keep the number of data points of the rotational speed of the compressor wheel 2 estimated by the amp unit 6 from becoming smaller when the engine rotational speed of the internal combustion engine 100 increases.

Further, the electronic control unit 200 (control device) of the internal combustion engine 100 according to the present embodiment is configured to calculate the kinetic energy of the rotating body of the exhaust turbocharger 7 including the compressor wheel 2 based on the rotational speed of the compressor wheel 2 estimated by the amp unit 6 and estimate the variation in combustion between cylinders based on that kinetic energy.

Due to this, the number of data points of the kinetic energy of the rotating body of the exhaust turbocharger while the internal combustion engine 100 is in the middle of one cycle also can be made substantially constant regardless of the engine rotational speed of the internal combustion engine 100. For this reason, it is possible to maintain the precision of detection of the difference in combustion torque between cylinders substantially constant regardless of the engine rotational speed of the internal combustion engine 100. Alternatively, it is possible to keep the number of data points of the kinetic energy of the rotating body of the exhaust turbocharger while the internal combustion engine 100 is in the middle of one cycle from becoming smaller the higher the engine rotational speed of the internal combustion engine 100. For this reason, it is possible to keep the precision of detection of the difference in combustion torque between cylinders from falling when the engine rotational speed of the internal combustion engine 100 increases.

Third Embodiment

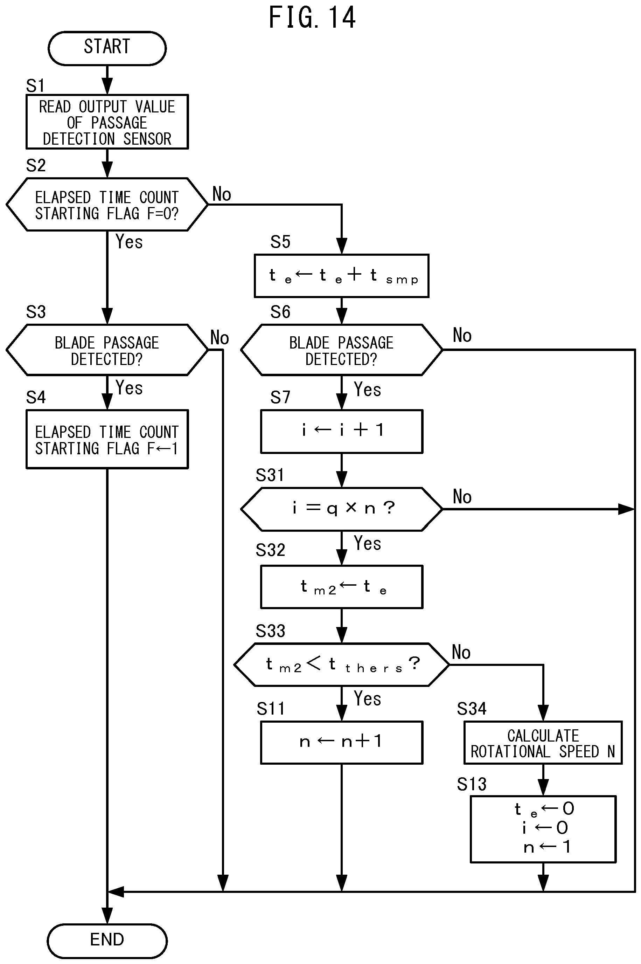

Next, referring to FIG. 14, a rotational speed estimating device according to a third embodiment will be explained. The rotational speed estimating device according to the third embodiment differs from the first embodiment in that it calculates the elapsed time $t_e$ from when a reference blade passes in front of the passage detection sensor 5 once as the unit blade passage time $t_{m2}$ each time a blade 22 passes in front of the passage detection sensor 5 a predetermined number of times and, when the unit blade passage time $t_{m2}$ becomes a threshold value $t_{thres}$ or more, calculates the rotational speed of the compressor wheel 2. Below, this point of difference will be primarily explained.

In the above-mentioned first embodiment, the shape error of the blade 22 was considered and the elapsed time $t_e$ from when the reference blade passed in front of the passage detection sensor 5 one time was calculated as the reference blade passage time $t_m$ each time the reference blade passed in front of the passage detection sensor 5. However, if the shape error of the blade 22 can be ignored, it is possible to consider only the sampling error and calculate the elapsed time $t_e$ from when the reference blade passes in front of the passage detection sensor 5 once as the unit blade passage time $t_{m2}$ each time a blade 22 passes in front of the passage detection sensor 5 exactly a predetermined number of times "q".

In this case, for example, if the predetermined number of times "q" is 1, the elapsed time $t_e$ from when the reference blade passes in front of the passage detection sensor 5 once is calculated as the unit blade passage time $t_{m2}$ each time a blade 22 passes in front of the passage detection sensor 5. Further, for example, if the predetermined number of times "q" is 6, the elapsed time $t_e$ from when the reference blade passed in front of the passage detection sensor 5 once is calculated as the unit blade passage time $t_{m2}$ each time a blade 22 passes in front of the passage detection sensor 5 six times (that is, each time the compressor wheel 2 rotates by a half turn).

FIG. 14 is a flow chart of control for estimation of the rotational speed of the compressor wheel 2 according to the present embodiment. The amp unit 6 repeatedly performs this routine by a predetermined processing period (=sampling period $t_{smp}$).

The processing from step S1 to step S13 is similar to the first embodiment.

At step S31, the amp unit 6 judges if the number of times of blade passage "i" from when the reference blade passes in front of the detecting part of the passage detection sensor 5 is a positive whole multiple of a predetermined number of times "q" (that is, q×n). In the present embodiment as well, the initial value of the positive integer "n" is "1". The amp unit 6 proceeds to the processing of step S32 if the number of times of blade passage "i" is a positive whole multiple of the predetermined number of times "q" and ends the current processing if not.

At step S32, the amp unit 6 sets the elapsed time $t_e$ calculated at step S5 as the unit blade passage time $t_{m2}$. That is, the amp unit 6 sets the elapsed time $t_e$ from when the reference blade first passes in front of the detecting part of the passage detection sensor 5 as the unit blade passage time $t_{m2}$ each time a blade 22 passes in front of the detecting part of the passage detection sensor 5 a predetermined number of times. Note that the value of the predetermined number of times "q" can be suitably selected from any positive integer.

At step S33, the amp unit 6 judges if the unit blade passage time $t_{m2}$ is less than the threshold value $t_{thres}$. The amp unit 6 proceeds to the processing of step S11 if the unit blade passage time $t_{m2}$ is less than the threshold value $t_{thres}$. On the other hand, the amp unit 6 proceeds to the processing of step S12 if the unit blade passage time $t_{m2}$ is the threshold value $t_{thres}$ or more.

At step S34, the amp unit 6 estimates the rotational speed N (rpm) of the compressor wheel based on the unit blade passage time $t_{m2}$, the number of times "i" a blade 22 passes the detection part of the passage detection sensor 5 during the unit blade passage time $t_{m2}$ (=number of times of blade passage), and the total number "p" of the blades 22. Specifically, the unit blade passage time $t_{m2}$ and positive integer "n" are entered into the following formula (7) to estimate the rotational speed N of the compressor wheel:

$$N=60/\{(p/i) \times t_{m2}\} \ldots (7)$$

According to the embodiment explained above, the amp unit 6 (rotational speed estimating device) estimates the rotational speed of a compressor wheel 2 (rotating body) having a plurality of blades 22 based on the output value of a passage detection sensor 5 (detecting part) for detecting the passage of a blade 22 of the compressor wheel 2 over a predetermined position inside a housing 3 holding the compressor wheel 2. It is configured to calculate the elapsed time $t_e$ from when any one blade (reference blade) among the plurality of blades 22 passes the predetermined position once as the unit blade passage time $t_{m2}$ each time a blade 22 passes the predetermined position a predetermined number of times and so as to estimate the rotational speed of the compressor wheel 2 based on the unit blade passage time $t_{m2}$, the number of times "i" a blade 22 passes a predetermined position during the unit blade passage time $t_{m2}$, and the total number "p" of blades 22 when the unit blade passage time $t_{m2}$ becomes the threshold value $t_{thres}$ or more.

For this reason, it is possible to estimate the rotational speed of the compressor wheel 2 in a state with the sampling error E constantly kept at not more than a certain error regardless of the actual rotational speed of the compressor wheel 2. Therefore, the rotational speed of the compressor wheel 2 can be precisely estimated.

Above, embodiments of the present disclosure were explained, but the above embodiments only show some of the examples of application of the present disclosure. They are not intended to limit the technical scope of the present disclosure to specific constitutions of the embodiments.

Note that in the above embodiments, as an example of a rotating body, a compressor wheel 2 of a compressor 1 of an exhaust turbocharger was mentioned, but it is possible to estimate the rotational speed of any rotating body so long as a rotating body having a plurality of blades. Therefore, for example, it is also possible to estimate the rotational speed of an axial flow type compressor etc.

Further, in the above second embodiment, the amp unit 6 estimated the rotational speed, but the function of the amp unit 6 may also be given to the electronic control unit 200. That is, it is also possible to not provide the amp unit 6, but directly input the output signal of the passage detection sensor 5 to the electronic control unit 200 and have the electronic control unit 200 estimate the rotational speed. In this case, the electronic control unit 200 functions as the rotational speed estimating device.

Reference Signs List

1. compressor
2. compressor wheel (rotating body)
22. blade
3. housing
5. passage detection sensor (detecting part)
6. amp unit (rotational speed estimating device)
100. internal combustion engine (multicylinder internal combustion engine)
200. electronic control unit (control device, rotational speed estimating device)

**Claims**

1. A multicylinder internal combustion engine (100) comprising a rotational speed estimating device (6) estimating a rotational speed N of a rotating body (2) having a plurality of blades (22) based on an output value of a detecting part (5) detecting passage of a blade (22) of the rotating body over a predetermined position inside a housing (3) holding the rotating body,
the rotational speed estimating device (6) configured to:

acquire an output value of the detecting part (5) at a predetermined sampling period;
calculate as a reference blade passage time $t_m$ an elapsed time $t_e$ from when any one blade among the plurality of blades (22) passes the predetermined position once each time the any one blade (22) passes the predetermined position a predetermined number of times;
estimate the rotational speed N of the rotating body (2) based on the reference blade passage time $t_m$ and the number of times the any one blade (22) passes the predetermined position during the reference blade passage time when the reference blade passage time $t_m$ is a threshold value $t_{thres}$

**characterized in that**

the threshold value $t_{thres}$ is preset based on the sampling period $t_{smp}$ so that the sampling error E is not more than a predetermined allowable error $E_{allow}$, or more; and

the rotational speed estimating device (6) is configured to decrease the threshold value $t_{thres}$ as an engine rotational speed N of the multicylinder internal combustion engine (100) increases.

2. A control device (200) for a multicylinder internal combustion engine (100) according to claim 1, wherein

the control device (200) is configured to:

calculate a kinetic energy KE of a rotating body of the exhaust turbocharger (7) including the compressor wheel based on the rotational speed N of the compressor wheel (2) estimated by the rotational speed estimating device (6); and

estimate variation in combustion among cylinders based on the kinetic energy KE.

**Patentansprüche**

1. Mehrzylinderverbrennungsmotor (100) umfassend eine Drehzahlschätzvorrichtung (6), die eine Drehzahl N eines rotierenden Körpers (2) mit einer Vielzahl von Schaufeln (22) basierend auf einem Ausgabewert eines Erfassungsabschnitts (5) schätzt, der einen Durchgang einer Schaufel (22) des rotierenden Körpers über eine vorbestimmte Position innerhalb eines Gehäuses (3) erfasst, das den rotierenden Körper aufnimmt,

wobei die Drehzahlschätzvorrichtung (6) eingerichtet ist, um:

einen Ausgabewert des Erfassungsabschnitts (5) zu einer vorbestimmten Abtastperiode zu akquirieren;

als eine Referenzschaufeldurchgangszeit $t_m$ eine verstrichene Zeit $t_e$ zu berechnen, ab der eine der Schaufeln von der Vielzahl von Schaufeln (22) die vorbestimmte Position einmal durchläuft, jedes Mal, wenn eine Schaufel (22) die vorbestimmte Position eine vorbestimmte Anzahl von Malen durchläuft;

die Drehzahl N des rotierenden Körpers (2) basierend auf der Referenzschaufeldurchgangszeit $t_m$ und der Anzahl der Male mit der eine Schaufel (22) die vorbestimmte Position während der Referenzschaufeldurchgangszeit durchläuft zu schätzen, wenn die Referenz-

schaufeldurchgangszeit $t_m$ ein Schwellenwert $t_{thres}$ ist,

**dadurch gekennzeichnet, dass**

der Schwellenwert $t_{thres}$ basierend auf der Abtastperiode $t_{smp}$ voreingestellt ist, so dass der Abtastfehler E nicht mehr als ein vorbestimmter zulässiger Fehler $E_{allow}$ oder mehr ist; und

die Drehzahlschätzvorrichtung (6) eingerichtet ist, den Schwellenwert $t_{thres}$ mit einer Zunahme der Motordrehzahl N des Mehrzylinderverbrennungsmotors (100) zu verringern.

2. Steuerungsvorrichtung (200) für einen Mehrzylinderverbrennungsmotor (100) nach Anspruch 1, wobei

die Steuerungsvorrichtung (200) eingerichtet ist, um:

eine kinetische Energie KE eines rotierenden Körpers des Abgasturboladers (7), der das Verdichterrad umfasst, basierend auf der durch die Drehzahlschätzvorrichtung (6) geschätzten Drehzahl N des Verdichterrads (2) zu berechnen; und

eine Variation in der Verbrennung unter den Zylindern basierend auf der kinetischen Energie KE zu schätzen.

**Revendications**

1. Moteur à combustion interne à cylindres multiples (100) comprenant un dispositif d'estimation de vitesse de rotation (6) estimant une vitesse de rotation N d'un corps rotatif (2) ayant une pluralité de pales (22) en se basant sur une valeur de sortie d'une partie de détection (5) détectant le passage d'une pale (22) du corps rotatif sur une position prédéterminée à l'intérieur d'un logement (3) retenant le corps rotatif,

le dispositif d'estimation de vitesse de rotation (6) étant configuré pour :

acquérir une valeur de sortie de la partie de détection (5) à une période d'échantillonnage prédéterminée ;

calculer en tant que temps de passage $t_m$ de pale de référence, un temps écoulé $t_e$ à partir de quand n'importe quelle pale parmi la pluralité de pales (22) passe la position prédéterminée une fois à chaque fois que la n'importe quelle pale (22) passe la position prédéterminée un nombre prédéterminé de fois ;

estimer la vitesse de rotation N du corps rotatif (2) en se basant sur le temps de passage de pale de référence $t_m$ et le nombre de fois que la n'importe quelle pale (22) passe la position prédéterminée durant le temps de passage de pale de référence lorsque le temps de passage $t_m$ de pale de référence est une valeur seuil $t_{thres}$

**caractérisé en ce que**

la valeur seuil $t_{thres}$ est pré-réglée en se basant sur la période d'échantillonnage $t_{smp}$ de façon à ce que l'erreur d'échantillonnage E ne soit pas supérieure à une erreur admissible prédéterminée $E_{allow}$, ou plus ; et
le dispositif d'estimation de vitesse de rotation (6) est configuré pour abaisser la valeur seuil $t_{thres}$ à mesure qu'une vitesse de rotation moteur N du moteur à combustion interne à cylindres multiples (100) augmente.

2. Dispositif de commande (200) pour un moteur à combustion interne à cylindres multiples (100) selon la revendication 1, dans lequel le dispositif de commande (200) est configuré pour :

calculer une énergie cinétique KE d'un corps rotatif du turbocompresseur d'échappement (7) incluant la roue de compresseur en se basant sur la vitesse de rotation N de la roue de compresseur (2) estimée par le dispositif d'estimation de vitesse de rotation (6) ; et
estimer la variation de combustion parmi des cylindres en se basant sur l'énergie cinétique KE.

# FIG. 1

AMP UNIT

FIG. 2

# FIG. 3

# FIG. 4A

FIG. 4B

FIG. 5

# FIG. 6

# FIG. 7

Δt WHEN DEFINING t1−$t_{smp}$ AS "t1'" AND
t2+$t_{smp}$ AS "t2'" (=t2−t1+2$t_{smp}$)

Δtr(=t2−t1)

Δt WHEN DEFINING t1+$t_{smp}$ AS "t1'" AND
t2−$t_{smp}$ AS "t2'" (=t2−t1−2$t_{smp}$)

OUTPUT

$t_{smp}$     $t_{smp}$

···(B2∼B12)····

$t_{smp}$     $t_{smp}$

B1

B1

t1

t2

t1−$t_{smp}$     t1+$t_{smp}$

t2−$t_{smp}$     t2+$t_{smp}$

TIME

EP 3 348 956 B1

# FIG. 8

```
                    ┌──────────┐
                    │  START   │
                    └──────────┘
                         │
  S1  ┌──────────────────────────┐
      │    READ OUTPUT VALUE      │
      │       OF PASSAGE          │
      │   DETECTION SENSOR        │
      └──────────────────────────┘
                         │
  S2      ╱──────────────╲          No
        ╱  ELAPSED TIME    ╲──────────────────┐
       ╱ COUNT STARTING     ╲                 │
        ╲   FLAG F=0?       ╱                  │
         ╲────────────────╱                    │
              │ Yes                    S5  ┌──────────────┐
              │                            │ tₑ ← tₑ + tₛₘₚ │
              │                            └──────────────┘
              │                                 │
  S3      ╱──────────╲    No          S6     ╱──────────╲         No
        ╱ BLADE PASSAGE╲────────┐          ╱ BLADE PASSAGE╲──────────────────┐
        ╲  DETECTED?   ╱        │          ╲  DETECTED?   ╱                  │
         ╲────────────╱         │           ╲────────────╱                   │
  S4          │ Yes             │   S7           │ Yes                       │
      ┌─────────────────┐       │       ┌──────────────┐                     │
      │ ELAPSED TIME COUNT│      │       │  i ← i + 1    │                     │
      │ STARTING FLAG F←1 │      │       └──────────────┘                     │
      └─────────────────┘       │              │                             │
              │                 │   S8     ╱──────────╲        No             │
              │                 │        ╱  i = 12n ?  ╲──────────────────────┤
              │                 │        ╲            ╱                       │
              │                 │         ╲──────────╱                        │
              │                 │   S9         │ Yes                          │
              │                 │       ┌──────────────┐                      │
              │                 │       │  tₘ ← tₑ      │                      │
              │                 │       └──────────────┘                      │
              │                 │              │                              │
              │                 │  S10     ╱──────────╲      No               │
              │                 │        ╱ tₘ < tₜₕₑᵣₛ ? ╲────────┐           │
              │                 │        ╲            ╱           │           │
              │                 │         ╲──────────╱            │           │
              │                 │  S11         │ Yes        S12   │           │
              │                 │       ┌──────────────┐   ┌────────────────┐ │
              │                 │       │  n ← n+1     │   │  CALCULATE     │ │
              │                 │       └──────────────┘   │ ROTATIONAL SPEED N│
              │                 │              │       S13 └────────────────┘ │
              │                 │              │           ┌────────────────┐ │
              │                 │              │           │   tₑ ← 0        │ │
              │                 │              │           │   i ← 0         │ │
              │                 │              │           │   n ← 1         │ │
              │                 │              │           └────────────────┘ │
              │                 └──────┬───────┘                │             │
              │                        └────────────────────────┴─────────────┘
              │
         ┌──────────┐
         │   END    │
         └──────────┘
```

- S5: $t_e \leftarrow t_e + t_{smp}$
- S7: $i \leftarrow i + 1$
- S8: $i = 12n\,?$
- S9: $t_m \leftarrow t_e$
- S10: $t_m < t_{thers}\,?$
- S11: $n \leftarrow n+1$
- S12: CALCULATE ROTATIONAL SPEED N
- S13: $t_e \leftarrow 0$, $i \leftarrow 0$, $n \leftarrow 1$

# FIG. 9

AMP UNIT

ELECTRONIC CONTROL UNIT

CRANK ANGLE SENSOR

# FIG. 10

# FIG. 11

# FIG. 12

```
                    START

S1          READ OUTPUT VALUE
               OF PASSAGE
            DETECTION SENSOR

S2
        ELAPSED TIME COUNT              No
        STARTING FLAG F=0?

              Yes                    S5
                                         t_e ← t_e + t_smp
S3
           BLADE PASSAGE      No     S6
           DETECTED?                     BLADE PASSAGE      No
                                         DETECTED?
              Yes
S4                                          Yes
        ELAPSED TIME COUNT           S7
        STARTING FLAG F←1                 i ← i + 1

                                     S8
                                          i = 1 2 n ?      No

                                            Yes
                                     S9
                                          t_m ← t_e

                                     S21
                                          SET t_thres

                                     S10
                                          t_m < t_thers ?   No

                                            Yes
                                     S11                 S12
                                          n ← n+1             CALCULATE
                                                          ROTATIONAL SPEED N

                                                         S13
                                                              t_e ← 0
                                                              i ← 0
                                                              n ← 1

                    END
```

# FIG. 13

# FIG. 14

START

S1
READ OUTPUT VALUE
OF PASSAGE
DETECTION SENSOR

S2
ELAPSED TIME COUNT
STARTING FLAG F=0?
— No

Yes

S5
$t_e \leftarrow t_e + t_{smp}$

S3
BLADE PASSAGE
DETECTED?
— No

Yes

S4
ELAPSED TIME COUNT
STARTING FLAG F←1

S6
BLADE PASSAGE
DETECTED?
— No

Yes

S7
$i \leftarrow i + 1$

S31
$i = q \times n$ ?
— No

Yes

S32
$t_{m2} \leftarrow t_e$

S33
$t_{m2} < t_{thers}$ ?
— No

Yes

S11
$n \leftarrow n + 1$

S34
CALCULATE
ROTATIONAL SPEED N

S13
$t_e \leftarrow 0$
$i \leftarrow 0$
$n \leftarrow 1$

END

28

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015034780 A
- WO 22013114564 A1
- DE 19708000 A1
- US 2013304418 A1
- EP 2390471 A2
- EP 1564559 A1
- EP 2073019 A2